(19) Europäisches Patentamt
European Patent Office
Office européen des brevets

(11) EP 4 123 126 B1

(12) EUROPEAN PATENT SPECIFICATION

(45) Date of publication and mention
of the grant of the patent:
29.11.2023 Bulletin 2023/48

(51) International Patent Classification (IPC):
F01D 17/02 (2006.01)          F01D 17/08 (2006.01)
F01D 21/14 (2006.01)          F01D 17/00 (2006.01)
G01N 29/14 (2006.01)          G01N 29/44 (2006.01)

(21) Application number: 22185796.4

(22) Date of filing: 19.07.2022

(52) Cooperative Patent Classification (CPC):
F01D 21/14; F01D 17/00; F01D 17/08; G01N 29/14;
G01N 29/4436; G01N 29/4454; F05D 2220/323;
F05D 2260/80; F05D 2270/333; F05D 2270/54;
F05D 2270/701; F05D 2270/703; F05D 2270/708;
F05D 2270/81; G01N 2291/0258

(54) **METHOD AND DEVICE FOR MONITORING THE OPERATION OF A PAIR OF TURBOPROP ENGINES THROUGH THE NUMERICAL PROCESSING OF AN ACOUSTIC MAGNITUDE**

VERFAHREN UND VORRICHTUNG ZUM ÜBERWACHEN DES BETRIEBS EINES TURBOPROP-TRIEBWERKPAARES DURCH NUMERISCHE VERARBEITUNG EINER AKUSTISCHEN GRÖSSE

PROCÉDÉ ET DISPOSITIF DE SURVEILLANCE DU FONCTIONNEMENT D'UNE PAIRE DE GROUPES TURBOPROPULSEURS AU MOYEN DU TRAITEMENT NUMÉRIQUE D'UNE GRANDEUR ACOUSTIQUE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 23.07.2021 IT 202100019682

(43) Date of publication of application:
25.01.2023 Bulletin 2023/04

(73) Proprietor: Leonardo S.p.a.
00195 Roma (IT)

(72) Inventor: MENAFRO, Felice
10146 TORINO (IT)

(74) Representative: Studio Torta S.p.A.
Via Viotti, 9
10121 Torino (IT)

(56) References cited:
EP-A1- 3 217 170          EP-A2- 2 538 034
EP-B1- 2 305 958          WO-A1-2015/052438

**Description**

## CROSS-REFERENCE TO RELATED APPLICATIONS

This patent application claims priority from Italian patent application no. 102021000019682 filed on July 23, 2021.

### Field of the invention.

The present invention relates to a method and a device for monitoring the operation of a pair of turboprop engines through the numerical processing of an acoustic magnitude.

### Background of the invention.

Studies conducted on aeronautical propulsion have shown that **turbo-prop** technologies (aeronautical engine consisting of an aeronautical propeller driven by a turbine) have lower fuel consumption than **turbofan** technologies (which is known to be a particular category of turbojet engine using two separate airflows).

Although turboprop engines are not able to achieve cruising performances comparable to those of the turbofan engines, they have maximum thermodynamic efficiency at typical operating speeds for regional flights and lend themselves to the integration into the hybrid propulsion.

On the other hand, turboprop engines require continuous monitoring of the performances provided to predict faulty operations well in advance.

For example, the US Federal Specification FAR Part 43 Appendix D stipulates in relation to the inspection of turboprop propulsion to "...*perform an inspection annually or every 100 flight hours regarding the following events: cracks, fissures, oil leaks, ....";* for this reason the turboprop engines are subjected to periodic scheduled maintenance regardless of the detection of faults.

Aim of the present invention is to realise a method and a device for monitoring the operation of a pair of turboprop engines (a pair or previous one) through the numerical processing of an acoustic magnitude, in particular sound pressure levels acquired in flight.

European Patent Application EP2305958B1 describes a method in which the sound pressure level generated by the flying turboprop engines for a predefined operating speed is measured by analysing and comparing, in the time domain, the stored behaviour of the turboprop engines or by comparing them in pairs. One or more of the stored impact sounds correspond to unfavourable weather conditions. The method involves determining whether the noise of the particle impacts corresponds to one or more stored impact sounds.

EP 2 538 034 A2, WO 2015/052438 A1 and EP 3 217 170 A1 disclose further examples of devices and monitoring methods using acoustic sensors.

### Aim of the present invention.

The foregoing aim is achieved by the present invention in that it relates to a method and a device for monitoring the operation of a pair of turboprop engines through the numerical processing of an acoustic magnitude of the type described in claims 6 and 1.

### Brief description of the drawings

Figure 1 shows, in simplified cross-section, an aircraft propelled by a pair of turboprop engines; and

Figure 2 shows a variant of the aircraft shown in Figure 1.

### Description of the preferred embodiment example.

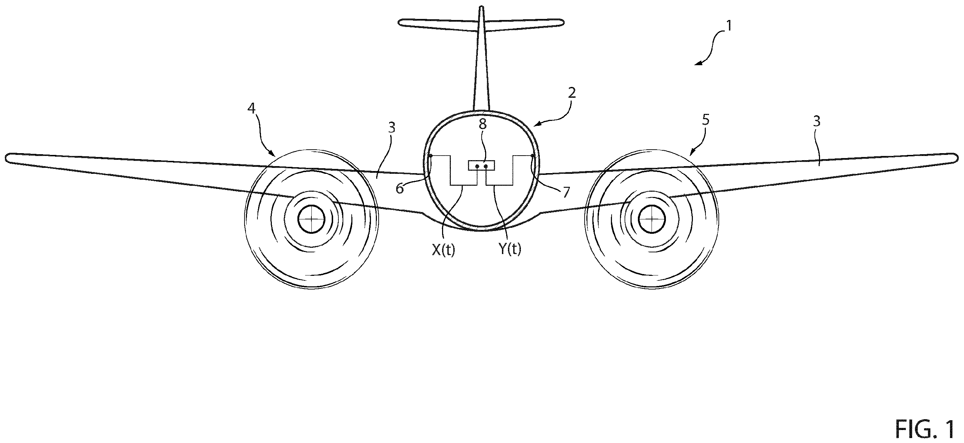

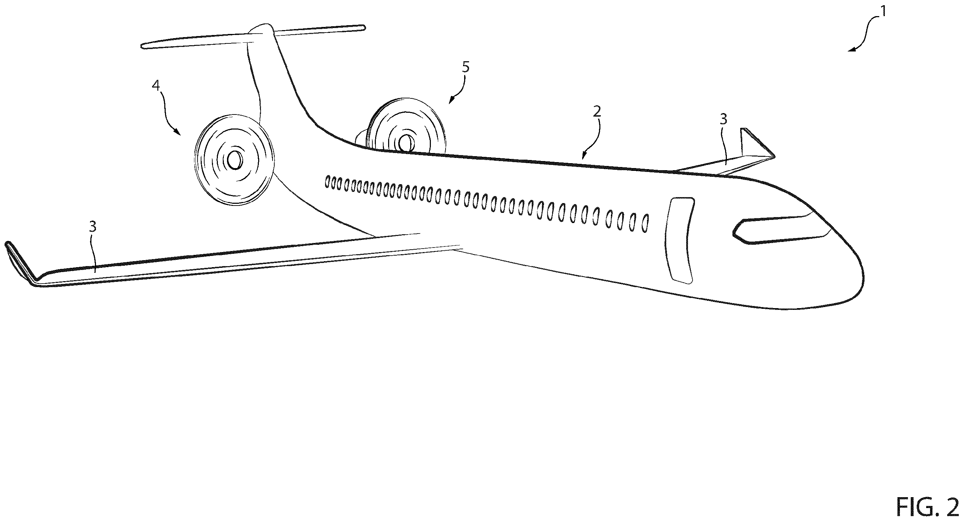

In Figure 1, the numeral 1 denotes an aircraft (of known type) which comprises a fuselage 2 provided with a pair of wings 3. The aircraft is provided with a first turboprop engine 4 and with a second turboprop engine 5 which in the example described are arranged below the wings. However, the arrangement of the engines could be different, e.g. they could be arranged at the tail of the aircraft and arranged on the opposite side of a T-shaped tail assembly (see Figure 2).

According to the present invention there is provided a first acoustic sensor 6 (typically a microphone arranged flush with the fuselage) configured to detect the sound pressure generated by the first turboprop engine 4 generating a respective first polytonal signal **x(t)** and a second acoustic sensor 7 (typically a microphone arranged flush with the fuselage) configured to detect the sound pressure generated by the second turboprop engine 5 generating a respective second polytonal signal **y(t).** The sensors 6 and 7 are arranged on opposite sides of the fuselage 2 of the aircraft and are arranged in front of the plane of the propellers of the first and second engines 4,5 with respect to the front portion of the fuselage 2.

An electronic processing unit 8 receives, at input, the first and second signals **x(t),y(t)** and provides, at output, data indicative of the operating state of the first and/or second turboprop engine 4 and 5. The electronic unit 8 is also conveniently designed to record flight parameters such as altitude, cruising speed, route, etc.

According to the present invention, the electronic unit 8 is configured to iteratively calculate by means of a function **Rx** the similarity between the first signal **x(t)** at a time T1 and the first signal at a time T2 subsequent to the time T1 or, by means of a function **Ry,** the similarity between the second signal **y(t)** at a time T1 and the second signal at a time T2 subsequent to the time T1.

Typically, the function **Rx** is obtained by the auto-correlation function which for a signal of finite energy x is defined as:

$$R_x(t) \overset{\mathrm{def}}{=} \int_{-\infty}^{\infty} x^*(\tau)\, x(t+\tau)\, d\tau$$

where $X^*$ indicates the <u>conjugated complex</u> of *x*.

The function **Rx Ry** provides, in the interval τ (space of the delays), **the degree of similarity** of the first /second signal in two different times.

As is well known, a degree of similarity close to a first value 1 indicates two signals that are very similar or substantially the same, while a degree of similarity close to a second value (zero) indicates two signals that have no similarity at all.

The electronic unit 8 is designed to detect and store the degrees of similarity calculated in successive iterations in order to detect situations of normal operation of the engines when the degrees of similarity calculated in successive iterations (and therefore for successive flights) remain within a safety interval of a first value close to 1 and to detect a potential fault in the engines when the degrees of similarity calculated in successive iterations depart from this safety interval tending to a second value equal to zero and therefore lower than the first value.

These operations will be shown by the following examples.

<u>**Example 1**</u>

the degree of similarity '0' flight hours is worth 1.000;

the degree of similarity at '1000' flight hours compared to that at '0' is worth 0.950 (first iteration);

the degree of similarity at '2000' flight hours compared to that at '0' is worth 0.900 and compared to 1000 flight hours is worth 0.92 (second iteration);

the degree of similarity at '5000' flight hours compared to that at '0' is worth 0.85, compared to 1000 flight hours is worth 0.87 and compared to 2000 flight hours is worth 0.88 (third iteration); and

the degree of similarity at '10000' flight hours compared to that at '0' is worth 0.8, compared to 1000 flight hours is worth 0.81, compared to 2000 flight hours is worth 0.83 and compared to 5000 flight hours is worth 0.86 (fourth iteration).

| Flight hours | 0 | 1000 | 2000 | 5000 | 10000 |
|---|---|---|---|---|---|
| **0** | 1,000 | | | | |
| **1000** | 0,950 | 1,000 | | | |
| **2000** | 0,900 | 0,920 | 1,000 | | |
| **5000** | 0,850 | 0,870 | 0,880 | 1,000 | |
| **10000** | 0,800 | 0,810 | 0,830 | 0,860 | 1,000 |

The data shown above indicate a slow descent of the degree of similarity within the safety interval during successive iterations and are indicative of a normal degradation of engine performances requiring an ordinary maintenance session.

### Example 2
the degree of similarity '0' flight hours is worth 1.000;

the degree of similarity at '1000' flight hours compared to that at '0' is worth 0.950 (first iteration);

the degree of similarity at '2000' flight hours compared to that at '0' is worth 0.900 and compared to 1000 flight hours is worth 0.92 (second iteration);

the degree of similarity at '5000' flight hours compared to '0' is worth 0.85, compared to 1000 flight hours is worth 0.82 and compared to 2000 flight hours is worth 0.84 (third iteration);

the degree of similarity at '10000' flight hours compared to that at '0' is worth 0.8, compared to 1000 flight hours is worth 0.69, compared to 2000 flight hours is worth 0.73 and compared to 5000 flight hours is worth 0.79 (fourth iteration).

| Flight hours | 0 | 1000 | 2000 | 5000 | 10000 |
|---|---|---|---|---|---|
| **0** | 1,000 | | | | |
| **1000** | 0,950 | 1,000 | | | |
| **2000** | 0,900 | 0,870 | 1,000 | | |
| **5000** | 0,850 | 0,820 | 0,840 | 1,000 | |
| **10000** | 0,800 | 0,690 | 0,730 | 0,790 | 1,000 |

As can be seen between 5,000 and 1,000 flight hours, there is a rapid decrease in the degree of similarity that abruptly departs from the safety interval (for example, the safety interval can vary between 1 and 0.8). There is therefore an indication to proceed ahead of the scheduled maintenance.

### Example 3
the degree of similarity '0' flight hours is worth 1.000;

the degree of similarity at '1000' flight hours compared to that at '0' is worth 0.950 (first iteration);

the degree of similarity at '2000' flight hours compared to that at '0' is worth 0.900 and compared to 1000 flight hours is worth 0.92 (second iteration);

the degree of similarity at '5000' flight hours compared to '0' is worth 0.85, compared to 1000 flight hours is worth 0.87 and compared to 2000 flight hours is worth 0.64 (third iteration);

the degree of similarity at '10000' flight hours compared to that at '0' is worth 0.8, compared to 1000 flight hours is worth 0.81, compared to 2000 flight hours is worth 0.43 and compared to 5000 flight hours is worth 0.39 (fourth iteration).

| Flight hours | 0 | 1000 | 2000 | 5000 | 10000 |
|---|---|---|---|---|---|
| **0** | 1,000 | | | | |
| **1000** | 0,950 | 1,000 | | | |
| **2000** | 0,900 | 0,920 | 1,000 | | |
| **5000** | 0,850 | 0,870 | 0,640 | 1,000 | |
| **10000** | 0,800 | 0,810 | 0,430 | 0,390 | 1,000 |

This table shows the significant worsening of the degree of similarity at 5000 hours compared to 2000 hours, which is confirmed by the further decrease to 0.43 compared to 2000 hours and 0.39 compared to 5000 hours.

In this case, immediate maintenance is required to repair a "major" fault.

In other words, the electronic unit 8 is designed to calculate the derivative of the degree of similarity between successive interactions and to detect a situation of potential danger if this derivative exceeds a value greater than a threshold.

In addition to the maintenance aid functions shown above according to the present invention, indications are also provided concerning the operation of the engines.

For this purpose, the electronic unit 8 is configured to calculate the cross-correlation function of the signals **x(t)** and **y(t)** which for two finite energy signals is defined as:

$$R_{xy}(t) = (x \star y)(t) \stackrel{\text{def}}{=} \int_{-\infty}^{\infty} x^*(\tau)\, y(t+\tau)\, d\tau$$

where $X^*$ indicates the conjugated complex of $x$.

The function Rxy provides, in the interval $\tau$ (space of the delays) **the degree of similarity** between the first and second signals and provides the pilot with an indication of the operation of the two engines which should rotate at the same rotation speed.

Since the rotation speeds of the engines are of the sinusoidal type, a high value of degree of similarity (close to 1) means that the two engines rotate at the same speed, a very low value of degree of similarity indicates that the two engines rotate at different speeds. In this case, the pilot can act manually on one of the two engines so as to reduce the speed variation.

### Example 4

For example, the cross-correlation between the two signals **x(t) and y(t)** as the hours vary takes on the following values:

- 1 - zero flight hours;

- 1 - 1000 flight hours;

- 1 - 2000 flight hours;

- 0.98 - 5000 flight hours; and

- 0.97 - 10,000 flight hours

As shown in the table below:

| Flight hours (TP1) | Flight hours (TP2) | 0 | 1000 | 2000 | 5000 | 10000 |
|---|---|---|---|---|---|---|
| 0 | | 1,000 | | | | |
| 1000 | | | 1,000 | | | |
| 2000 | | | | 1,000 | | |
| 5000 | | | | | 0,980 | |
| 10000 | | | | | | 0,970 |

The cross-correlation value therefore remains in the safe interval 1-0.8 for successive flights, although it indicates an onset of degradation after 5000 flight hours.

### Numbers.

1    aircraft
2    fuselage

3      wings
4      first turboprop engine
5      second turboprop engine
6      first acoustic sensor
x(t)   first signal
7      second acoustic sensor
8      electronic processing units

**Claims**

1.   A device for monitoring the operation of a pair of turboprop engines of an aircraft that comprises a fuselage (2) provided with a pair of wings (3) and is provided with at least a first turboprop engine (4) and with a second turboprop engine (5); the device comprises a first acoustic sensor (6) configured to detect the sound pressure generated by the first turboprop engine (4) generating a respective first signal **x(t)** and a second acoustic sensor (7) configured to detect the sound pressure generated by the second turboprop engine (5) generating a respective second signal **y(t);** the device comprises an electronic processing unit (8) that receives, at input, the first and second signals **x(t),y(t)** and provides, at output, data indicative of the operating state of the first and/or second turboprop engine (4 and 5), **characterized in that** the electronic unit (8) is configured to iteratively calculate by means of a function **Rx** the similarity between the first signal **x(t)** at a time T1 and the first signal at a time T2 subsequent to the time T1 or, by means of a function **Ry,** the similarity between the second signal **y(t)** at a time T1 and the second signal at a time T2 subsequent to the time T1;
the electronic unit (8) is designed to detect and store the degrees of similarity calculated in successive iterations in order to detect situations of normal operation of the engines when the degrees of similarity calculated in successive iterations remain within a safety interval of a first value and to detect a potential fault in the engines when the degrees of similarity calculated in successive iterations depart from this safety interval tending towards a second value lower than the first value.

2.   The device according to claim 1, wherein the first and second sensors (6,7) are arranged on opposite sides of the fuselage (2) of the aircraft and are arranged in front of the plane of the propellers of the first and second engines (4,5) with respect to the front portion of the fuselage (2).

3.   The device according to claim 1 or 2 wherein the function **Rx** is obtained by the auto-correlation function defined as:

$$R_x\left(t\right) \overset{\text{def}}{=} \int_{-\infty}^{\infty} x^*\left(\tau\right) x(t+\tau)\, d\tau$$

where $X^*$ indicates the conjugated complex of $x$.
the function Rx provides, in the space interval of the delays $\tau$, **the degree of similarity** of the first/second signal in the two different times T1 and T2.

4.   The device according to any one of the preceding claims, wherein the electronic processing unit (8) is designed to calculate the derivative of the degree of similarity between successive interactions and to detect a potentially dangerous situation if said derivative exceeds a value greater than a threshold.

5.   The device according to any one of the preceding claims, wherein the electronic processing unit (8) is furthermore designed to calculate the cross-correlation function **Rxy** of the signals **x(t) and y(t)** defined as:

$$R_{xy}\left(t\right) = (x \star y)(t) \overset{\text{def}}{=} \int_{-\infty}^{\infty} x^*\left(\tau\right) y(t+\tau)\, d\tau$$

where $X^*$ indicates the conjugated complex of $x$.
the function **Rxy** provides, in the space interval of the delays $\tau$ the degree of similarity between the first and second signals and provides the pilot with an indication of the operation of the two engines which should rotate at the same rotation speed.

6. A method for monitoring the operation of a pair of turboprop engines of an aircraft, which includes a fuselage (2) provided with a pair of wings (3) and is provided with at least a first turboprop engine (4) and a second turboprop engine (5); comprising the steps of:

detecting by means of an acoustic sensor the sound pressure generated by the first turboprop engine (4) generating a respective first signal **x(t);**
detecting by means of an acoustic sensor the sound pressure generated by the second turboprop engine (5) generating a respective second signal **y(t);**
processing the first and second signals **x(t),y(t)** to provide data indicative of the operating state of the first and/or second turboprop engine (4 and 5),
**characterized in that** it comprises the steps of:

iteratively calculating, by means of a function **Rx/Ry,** the similarity between the first signal **x(t)** at a time T1 and the first signal at a time T2 subsequent to time T1 or the similarity between the second signal **y(t)** at a time T1 and the second signal at a time T2 following time T1;
detecting and storing the degrees of similarity calculated to detect situations of normal operation of the engines when the degrees of similarity calculated for successive iterations remain within a safety interval of a first value, and detecting a potential fault in the engines when the degrees of similarity calculated in successive iterations depart from this safety interval tending towards a second value lower than the first value.

7. The method according to claim 6 wherein the function **Rx** is obtained by the auto-correlation function defined as:

$$R_x\left(t\right) \overset{\text{def}}{=} \int_{-\infty}^{\infty} x^*\left(\tau\right) x(t+\tau)\, d\tau$$

where $X^*$ indicates the conjugated complex of $x$.
the function Rx provides, in the space interval of the delays $\tau$, **the degree of similarity** of the first/second signal in the two different times T1 and T2.

8. The method according to claim 6 or 7 wherein the step of calculating the cross-correlation function **Rxy** of the signals **x(t) and y(t)** is foreseen defined as:

$$R_{xy}\left(t\right) = (x \star y)(t) \overset{\text{def}}{=} \int_{-\infty}^{\infty} x^*\left(\tau\right) y(t+\tau)\, d\tau$$

where $X^*$ indicates the conjugated complex of $x$.
the function **Rxy** provides, in the space interval of the delays $\tau$ the degree of similarity between the first and second signals and provides the pilot with an indication of the operation of the two engines which should rotate at the same rotation speed.

9. The method according to claim 6, 7 or 8 comprising the step of calculating the derivative of the degree of similarity between successive interactions and detecting a potentially dangerous situation if said derivative exceeds a value above a threshold.

**Patentansprüche**

1. Eine Vorrichtung zum Überwachen des Betriebs eines Paars Turboproptriebwerke eines Luftfahrzeugs, das einen Rumpf (2), der mit einem Paar Flügel (3) versehen ist, umfasst und zumindest mit einem ersten Turboproptriebwerk (4) und mit einem zweiten Turboproptriebwerk (5) versehen ist; wobei die Vorrichtung einen ersten Schallsensor (6), der eingerichtet ist, den Schalldruck, der durch das erste Turboproptriebwerk (4) erzeugt wird, zu detektieren, wobei ein jeweiliges erstes Signal (x(t) erzeugt wird, und einen zweiten Schallsensor (7), der eingerichtet ist, den Schalldruck, der durch das zweite Turboproptriebwerk (5) erzeugt wird, zu detektieren, wobei ein jeweiliges zweites Signal y(t) erzeugt wird, umfasst; wobei die Vorrichtung eine elektronische Verarbeitungseinheit (8) umfasst, die am Eingang das erste und das zweite Signal x(t), y(t) empfängt und am Ausgang Daten bereitstellt, die den Betriebszustand des ersten und/oder des zweiten Turboproptriebwerks (4 und 5) angeben, **dadurch gekennzeichnet, dass** die elektronische Einheit (8) eingerichtet ist, mittels einer Funktion Rx die Ähnlichkeit zwischen dem ersten Signal x(t) zu einer Zeit T1 und dem ersten Signal zu einer Zeit T2, die auf die Zeit T1 folgt, oder mittels einer Funktion Ry die Ähnlichkeit zwischen dem zweiten Signal y(t) zu einer Zeit T1 und dem zweiten Signal zu einer Zeit T2, die auf die Zeit T1 folgt, iterativ zu berechnen;

wobei die elektronische Einheit (8) ausgelegt ist, die Ähnlichkeitsgrade, die in aufeinanderfolgenden Iterationen berechnet werden, zu detektieren und zu speichern, um Situationen eines regulären Betriebs der Triebwerke zu detektieren, wenn die Ähnlichkeitsgrade, die in aufeinanderfolgenden Iterationen berechnet werden, innerhalb eines Sicherheitsintervalls mit einem ersten Wert bleiben, und einen möglichen Fehler in den Triebwerken zu detektieren, wenn die Ähnlichkeitsgrade, die in aufeinanderfolgenden Iterationen berechnet werden, mit der Tendenz zu einem zweiten Wert, der niedriger als der erste Wert ist, von diesem Sicherheitsintervall abweichen.

2. Die Vorrichtung nach Anspruch 1, wobei der erste und der zweite Sensor (6, 7) auf gegenüberliegenden Seiten des Rumpfs (2) des Luftfahrzeugs angeordnet sind und in Bezug auf den vorderen Abschnitt des Rumpfs (2) vor der Ebene der Propeller des ersten und des zweiten Triebwerks (4, 5) angeordnet sind.

3. Die Vorrichtung nach Anspruch 1 oder 2, wobei die Funktion Rx durch die Autokorrelationsfunktion erhalten wird, die definiert ist als:

$$R_x(t) \overset{def}{=} \int_{-\infty}^{\infty} x^*(\tau) x(t+\tau)\, d\tau\,,$$

wobei *x\** den konjugiert komplexen Wert von *x* angibt und
wobei die Funktion Rx im räumlichen Intervall der Verzögerungen $\tau$ den Ähnlichkeitsgrad des ersten/zweiten Signals in den zwei verschiedenen Zeiten T1 und T2 bereitstellt.

4. Die Vorrichtung nach einem der vorhergehenden Ansprüche, wobei die elektronische Verarbeitungseinheit (8) ausgelegt ist, die Ableitung des Ähnlichkeitsgrads zwischen aufeinanderfolgenden Wechselwirkungen zu berechnen und eine möglicherweise gefährliche Situation zu detektieren, wenn die Ableitung einen Wert überschreitet, der größer als ein Schwellenwert ist.

5. Die Vorrichtung nach einem der vorhergehenden Ansprüche, wobei die elektronische Verarbeitungseinheit (8) ferner ausgelegt ist, die Kreuzkorrelationsfunktion Rxy der Signale x(t) und y(t) zu berechnen, die definiert ist als:

$$R_{xy}(t) = (x * y)(t) \overset{def}{=} \int_{-\infty}^{\infty} x^*(\tau) y(t+\tau)\, d\tau\,,$$

wobei *x\** den konjugiert komplexen Wert von *x* angibt und
wobei die Funktion Rxy im räumlichen Intervall der Verzögerungen $\tau$ den Ähnlichkeitsgrad zwischen dem ersten und dem zweiten Signal bereitstellt und dem Piloten eine Angabe über den Betrieb der beiden Triebwerke bereitstellt, die mit derselben Drehzahl laufen sollten.

6. Ein Verfahren zum Überwachen des Betriebs eines Paars Turboproptriebwerke eines Luftfahrzeugs, das einen Rumpf (2), der mit einem Paar Flügel (3) versehen ist, enthält und zumindest mit einem ersten Turboproptriebwerk (4) und mit einem zweiten Turboproptriebwerk (5) versehen ist; das die folgenden Schritte umfasst:

Detektieren des Schalldrucks, der durch das erste Turboproptriebwerk (4) erzeugt wird, mittels eines Schallsensors, wobei ein jeweiliges erstes Signal x(t) erzeugt wird;
Detektieren des Schalldrucks, der durch das zweite Turboproptriebwerk (5) erzeugt wird, mittels eines Schallsensors, wobei ein jeweiliges zweites Signal y(t) erzeugt wird;
Verarbeiten des ersten und des zweiten Signals x(t), y(t), um Daten bereitzustellen, die den Betriebszustand des ersten und/oder des zweiten Turboproptriebwerks (4 und 5) angeben,

**dadurch gekennzeichnet, dass** es die folgenden Schritte umfasst:

iteratives Berechnen der Ähnlichkeit zwischen dem ersten Signal x(t) zu einer Zeit T1 und dem ersten Signal zu einer Zeit T2, die auf die Zeit T1 folgt, oder der Ähnlichkeit zwischen dem zweiten Signal y(t) zu einer Zeit T1 und dem zweiten Signal zu einer Zeit T2, die auf die Zeit T1 folgt, mittels einer Funktion Rx/Ry; Detektieren und Speichern der berechneten Ähnlichkeitsgrade, um Situationen eines regulären Betriebs der Triebwerke zu detektieren, wenn die Ähnlichkeitsgrade, die für aufeinanderfolgende Iterationen berechnet werden, innerhalb eines Sicherheitsintervalls mit einem ersten Wert bleiben, und Detektieren eines möglichen Fehlers in den Triebwerken, wenn die Ähnlichkeitsgrade, die in aufeinanderfolgenden Iterationen berechnet werden, mit der Tendenz zu einem zweiten Wert, der niedriger als der erste Wert ist, von diesem Sicherheitsintervall abweichen.

7. Das Verfahren nach Anspruch 6, wobei die Funktion Rx durch die Autokorrelationsfunktion erhalten wird, die definiert ist als:

$$R_x(t) \overset{def}{=} \int\limits_{-\infty}^{\infty} x^*(\tau)x(t+\tau)\,d\tau\,,$$

wobei $x^*$ den konjugiert komplexen Wert von $x$ angibt und
wobei die Funktion Rx im räumlichen Intervall der Verzögerungen $\tau$ den Ähnlichkeitsgrad des ersten/zweiten Signals in den zwei verschiedenen Zeiten T1 und T2 bereitstellt.

8. Das Verfahren nach Anspruch 6 oder 7, wobei der Schritt des Berechnens der Kreuzkorrelationsfunktion Rxy der Signale x(t) und y(t) vorhergesehen definiert ist als:

$$R_{xy}(t) = (x*y)(t) \overset{def}{=} \int\limits_{-\infty}^{\infty} x^*(\tau)y(t+\tau)\,d\tau\,,$$

wobei $x^*$ den konjugiert komplexen Wert von $x$ angibt und
wobei die Funktion Rxy im räumlichen Intervall der Verzögerungen $\tau$ den Ähnlichkeitsgrad zwischen dem ersten und dem zweiten Signal bereitstellt und dem Piloten eine Angabe über den Betrieb der zwei Triebwerke bereitstellt, die mit derselben Drehzahl rotieren sollten.

9. Das Verfahren nach Anspruch 6, 7 oder 8, das den Schritt des Berechnens der Ableitung des Ähnlichkeitsgrads zwischen aufeinanderfolgenden Wechselwirkungen und des Detektierens einer möglicherweise gefährlichen Situation, wenn die Ableitung einen Wert über einem Schwellenwert überschreitet, umfasst.

**Revendications**

1. Dispositif pour la surveillance du fonctionnement d'une paire de turbopropulseurs d'un aéronef qui comprend un fuselage (2) muni d'une paire d'ailes (3) et est muni d'au moins un premier turbopropulseur (4) et d'un second turbopropulseur (5) ; le dispositif comprend un premier capteur acoustique (6) configuré pour détecter la pression sonore générée par le premier turbopropulseur (4), générant un premier signal x(t) respectif et un second capteur acoustique (7) configuré pour détecter la pression sonore générée par le second turbopropulseur (5), générant un second signal y(t) respectif ; le dispositif comprend une unité de traitement électronique (8) qui reçoit, en entrée, les premier et second signaux x(t), y(t) et fournit, en sortie, des données indicatives de l'état de fonctionnement du premier et/ou du second turbopropulseur (4 et 5), **caractérisé en ce que** l'unité électronique (8) est configurée pour calculer, de manière itérative, au moyen d'une fonction Rx, la similarité entre le premier signal x(t) à un temps T1 et le premier signal à un temps T2 postérieur au temps T1 ou, au moyen d'une fonction Ry, la similarité entre le second signal y(t) à un temps T1 et le second signal à un temps T2 postérieur au temps T1 ; l'unité électronique (8) est conçue pour détecter et stocker les degrés de similarité calculés par itérations successives afin de détecter des situations de fonctionnement normal des turbopropulseurs lorsque les degrés de similarité calculés par itérations successives restent au sein d'un intervalle de sécurité d'une première valeur et de détecter une panne potentielle dans les turbopropulseurs lorsque les degrés de similarité calculés par itérations successives s'écartent de cet intervalle de sécurité en tendant vers une seconde valeur inférieure à la première valeur.

**2.** Dispositif selon la revendication 1, dans lequel les premier et second capteurs (6, 7) sont agencés sur des côtés opposés du fuselage (2) de l'aéronef et sont agencés à l'avant du plan des hélices des premier et second turbopropulseurs (4, 5) par rapport à la partie avant du fuselage (2).

**3.** Dispositif selon la revendication 1 ou 2 dans lequel la fonction Rx est obtenue par la fonction d'autocorrélation définie par :

$$R_x(t) \overset{\underline{\text{def}}}{=} \int_{-\infty}^{\infty} x^*(\tau)x(t+\tau)\,d\tau$$

où X* indique le complexe conjugué de x,
la fonction Rx fournit, dans l'intervalle d'espace des retards $\tau$, le degré de similarité du premier/second signal aux deux temps différents T1 et T2.

**4.** Dispositif selon l'une quelconque des revendications précédentes, dans lequel l'unité de traitement électronique (8) est conçue pour calculer la dérivée du degré de similarité entre interactions successives et pour détecter une situation potentiellement dangereuse si ladite dérivée dépasse une valeur supérieure à un seuil.

**5.** Dispositif selon l'une quelconque des revendications précédentes, dans lequel l'unité de traitement électronique (8) est en outre conçue pour calculer la fonction de corrélation croisée Rxy des signaux x(t) et y(t) définie par :

$$R_{xy}(t) = (x \star y)(t) \overset{\underline{\text{def}}}{=} \int_{-\infty}^{\infty} x^*(\tau)y(t+\tau)\,d\tau$$

où X* indique le complexe conjugué de x,
la fonction Rxy fournit, dans l'intervalle d'espace des retards $\tau$, le degré de similarité entre les premier et second signaux et fournit au pilote une indication du fonctionnement des deux turbopropulseurs qui doivent tourner à la même vitesse de rotation.

**6.** Procédé pour la surveillance du fonctionnement d'une paire de turbopropulseurs d'un aéronef, qui inclut un fuselage (2) muni d'une paire d'ailes (3) et est muni d'au moins un premier turbopropulseur (4) et d'un second turbopropulseur (5) ; comprenant les étapes de :

la détection, au moyen d'un capteur acoustique, de la pression sonore générée par le premier turbopropulseur (4), générant un premier signal x(t) respectif ;
la détection, au moyen d'un capteur acoustique, de la pression sonore générée par le second turbopropulseur (5), générant un second signal y(t) respectif ;
le traitement des premier et second signaux x(t), y(t) pour fournir des données indicatives de l'état de fonctionnement du premier et/ou du second turbopropulseur (4 et 5),
**caractérisé en ce qu'**il comprend les étapes de :

le calcul, de manière itérative, au moyen d'une fonction Rx/Ry, de la similarité entre le premier signal x(t) à un temps T1 et le premier signal à un temps T2 postérieur au temps T1 ou de la similarité entre le second signal y(t) à un temps T1 et le second signal à un temps T2 qui suit le temps T1 ;
la détection et le stockage des degrés de similarité calculés pour détecter des situations de fonctionnement normal des turbopropulseurs lorsque les degrés de similarité calculés pour des itérations successives restent au sein d'un intervalle de sécurité d'une première valeur, et détecter une panne potentielle dans les turbopropulseurs lorsque les degrés de similarité calculés par itérations successives s'écartent de cet intervalle de sécurité en tendant vers une seconde valeur inférieure à la première valeur.

**7.** Procédé selon la revendication 6 dans lequel la fonction Rx est obtenue par la fonction d'autocorrélation définie par :

$$R_x(t) \overset{\underline{\text{def}}}{=} \int_{-\infty}^{\infty} x^*(\tau)x(t+\tau)\,d\tau$$

où X* indique le complexe conjugué de x,
la fonction Rx fournit, dans l'intervalle d'espace des retards τ, le degré de similarité du premier/second signal aux deux temps différents T1 et T2.

**8.** Procédé selon la revendication 6 ou 7 dans lequel l'étape de calcul de la fonction de corrélation croisée Rxy des signaux x(t) et y(t) est envisagée définie par :

$$R_{xy}(t) = (x \star y)(t) \overset{\text{déf}}{=} \int_{-\infty}^{\infty} x^*(\tau) y(t + \tau) \, d\tau$$

où X* indique le complexe conjugué de x,
la fonction Rxy fournit, dans l'intervalle d'espace des retards τ, le degré de similarité entre les premier et second signaux et fournit au pilote une indication du fonctionnement des deux turbopropulseurs qui doivent tourner à la même vitesse de rotation.

**9.** Procédé selon la revendication 6, 7 ou 8 comprenant l'étape de calcul de la dérivée du degré de similarité entre interactions successives et de détection d'une situation potentiellement dangereuse si ladite dérivée dépasse une valeur au-dessus d'un seuil.

FIG. 1

FIG. 2

EP 4 123 126 B1

**REFERENCES CITED IN THE DESCRIPTION**

**Patent documents cited in the description**

- IT 102021000019682
- EP 2305958 B1
- EP 2538034 A2
- WO 2015052438 A1
- EP 3217170 A1